(19) Europäisches Patentamt / European Patent Office / Office européen des brevets

(11) **EP 4 393 887 A1**

(12) **EUROPEAN PATENT APPLICATION**

(43) Date of publication:
**03.07.2024 Bulletin 2024/27**

(21) Application number: **22216691.0**

(22) Date of filing: **27.12.2022**

(51) International Patent Classification (IPC):
**C01G 53/00** (2006.01)  **C01G 53/04** (2006.01)
**H01M 4/525** (2010.01)

(52) Cooperative Patent Classification (CPC):
**C01G 53/006; C01G 53/04; C01G 53/42;
C01G 53/50; H01M 4/505; H01M 4/525;**
C01P 2004/50; C01P 2004/51; C01P 2004/61;
C01P 2006/11; C01P 2006/12; C01P 2006/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Umicore Finland OY**
**67900 Kokkola (FI)**

(72) Inventors:
• **VEHKAMÄKI, Ville**
  **Kokkola (FI)**

• **DONG, Jiachen**
  **Kokkola (FI)**
• **NIITTYKOSIKI, Janne**
  **Kokkola (FI)**
• **PAAKKONEN, Miika**
  **Kokkola (FI)**
• **RÄSÄNEN, Samuli**
  **Kokkola (FI)**

(74) Representative: **Umicore RDI Patent Department**
**Watertorenstraat 33**
**2250 Olen (BE)**

(54) **POWDEROUS MATERIAL COMPRISING A HYDROXIDE AND METHOD FOR MANUFACTURING THE SAME**

(57) The present invention relates to a powderous material comprising a hydroxide or oxyhydroxide of one or more metal elements for preparing a positive electrode active material for secondary batteries, wherein the one or more metal elements include at least one of Ni, Co and Mn, wherein the material comprises secondary particles comprising a plurality of primary particles, wherein the material has a median particle size D50 between 3.0 $\mu$m and 20.0 $\mu$m as determined by laser diffraction, wherein said primary particles have a particle-based thickness distribution as determined by measuring primary particle thickness in an image taken by SEM, wherein said thickness distribution has a median thickness between 180 nm and 600 nm, and wherein the material has a span value (D90-D10)/D50 being at most 0.6, preferably at most 0.4, more preferably at most 0.2.

*Fig. 1*

EP 4 393 887 A1

**Description**

**TECHNICAL FIELD**

The present invention relates to metal hydroxides that can be used as precursors to cathode active materials for secondary batteries and to a method of manufacture thereof. Particularly, however not exclusively, the present invention concerns powderous material comprising hydroxide or oxyhydroxide of at least one or more metal elements, a and method for manufacturing powderous hydroxide or oxyhydroxide material, and a method for manufacturing a positive electrode active material for secondary batteries.

**BACKGROUND**

Lithium-ion secondary batteries typically include a negative electrode (anode), an electrolyte, and a positive electrode (cathode) that contains a lithium-transition metal oxide as an active material capable of insertion and desorption of lithium. Lithium-transition metal oxides are generally manufactured from transition-metal hydroxides, oxides or oxyhydroxide manufactured, generally referred as precursors, in turn in co-precipitation processes that disclose admixing of a metal salt solution and an alkali solution with the existence of a complexing agent.

As cathode materials are a critical component of rechargeable batteries and have a significant impact on the performance of the overall battery, in recent years there has been a lot of research and development in this area, including their precursors. Several trends for the development of cathode materials include, among others, higher energy densities, improved stability and cycling performance, and lower cost. One approach to improving the properties of cathode materials is to optimize the microstructure of the cathode material, which is directly reflected from the microstructure of its precursor. And one approach to lower the cost is to providing these precursors by a more efficient and/or cheaper process, ideally without compromising the quality thereof.

In view of above, there is a constant need for further improvements in the precursors and manufacturing process of precursors.

**SUMMARY OF THE INVENTION**

The present invention aims to provide hydroxides or oxyhydroxides suitable for precursors to cathode active materials with improved properties.

Viewed from a first aspect, the invention can provide a secondary particles-based powderous material comprising a hydroxide or oxyhydroxide of one or more metal elements for preparing a positive electrode active material for secondary batteries, wherein the one or more metal elements include at least one of Ni, Co and Mn. In other words, the invention provides a secondary particles-based powderous material compound for preparing a positive electrode active material for secondary batteries, the compound being a M-hydroxide or M-oxyhydroxide, wherein M represents element(s) and with M comprising, one or more metal elements including at least one of Ni, Co and Mn. According to the present invention, the secondary particles comprises a plurality of primary particles,

wherein the material/compound has a median particle size D50 between 3.0 $\mu$m and 20.0 $\mu$m as determined by laser diffraction,
wherein said primary particles have a particle-based thickness distribution as determined by measuring primary particle thickness in an image taken by SEM, wherein said thickness distribution has a median thickness between 180 nm and 600 nm, wherein the median particle thickness is a corresponding thickness when a cumulative percentage of the thickness distribution reaches 50%, and
wherein the material/compound has a span value (D90-D10)/D50 being at most 0.6, preferably at most 0.4, more preferably at most 0.2.

Such material/compound according to the present invention is also simply referred herein as a precursor, for the sake of easy explanation. The precursor according to the present invention have a composition that can be presented by a general formula: M-$O_x(OH)_{2-x}$ , wherein $0 \leq x \leq 2$, and M includes at least one of the Ni, Co and Mn, and possibly at least one other element like an impurity such as Na, S, etc.

According to the invention, at least some of the secondary particles have such a morphology or microstructure, that at least some of the primary particles have more than one surface that form a part of the external surface of the secondary particles, and at least some of said surfaces of the primary particles intersect with each other, and at least some of said primary particles have a laminated thickness, i.e. particle-based thickness as described herein, which is a distance through one surface delimited between two neighboring surfaces which do not intersect with each other.

The combined characteristics according to the invention, i.e. the disclosed ranges of median secondary particle size, median thickness, and the span value may contribute to a low specific surface area of the powerous material, which may in turn contribute to a dense structure of the precursor. Further, as the microstructure of a cathode material generally inherits the microstructure of its precursor, the low surface area of a cathode material is preferable to prevent moisture and carbon uptake during when exposed to air and reduce the risk of side reaction with electrolyte in the battery.

Furthermore, the precursor according to the present invention also contributes to improved properties of positive electrode active material made from the powderous material as precursor. For example, the cathode material made from the precursor according to the present invention shows a lower total base and moisture uptake. The total base and moisture uptake indicating unwanted surface impurity which cause problem during application of positive electrode active material in an electrochemical cell, such as gelation during slurry formation and gassing during cycling.

Viewed from a second aspect, the invention also provides a method for manufacturing a powderous material comprising a hydroxide or oxyhydroxide of one or more metal elements, preferably the powderous material is the powderous material according to the first aspect of the invention. Said hydroxide or oxyhydroxide is suitable for precursors to cathode active materials. Said one or more metal elements include at least one of Ni, Co and Mn. In other words, the invention provdes a method for manufacturing the secondary particles-based powderous material compound according to the first aspect of the invention. The method comprises

- supplying a flow of a metal salt solution comprising the one or more metal elements to a reactor vessel for a time period,
- during the time period, mixing the metal salt solution with an aqueous solution comprising one or more alkali hydroxides and an aqueous solution of ammonia ($NH_{3(aq)}$), thereby precipitating the hydroxide of the one or more metal elements and forming the aqueous slurry comprising hydroxide or oxyhydroxide particles of the one or more metal elements,
  wherein during the time period, maintaining in the reactor vessel:

  - a range of pH value of the aqueous slurry, the range being superior or equal to 11.5 and inferior or equal to 12.0, preferably superior or equal to 11.6 and inferior or equal to 11.9, wherein the pH value of the aqueous slurry is the pH value as measured on a sample of the aqueous slurry after cooling to 20°C,
  - a concentration of $NH3_{(aq)}$ of superior or equal to 12.0 g/l and preferably inferior or equal to 15.0 g/l, and
  - a temperature of the aqueous slurry which is at least 70°C and which is at most 99 °C, preferably at least 80°C and at most 90°C;

wherein after the end of the time period the aqueous slurry in the reactor vessel is further processed by separating a solid fraction from a liquid fraction and drying the solid fraction to obtain the material/compound.

The time period may be denoted as T1-T2, referring a progress of time starting at time T1, i.e. at the beginning of the time period, and ending at time T2, i.e. at the end of the time period.

The combination of disclosed ranges of the pH value, the concentration of $NH3_{(aq)}$, and the eaction temperature leads to the precursor with the special morphology and/or the characteristics according to the invention. Further, the resulting precursor has a reduced level of sulfur. When manufacturing cathode active materials, using precursors with reduced level of sulfur is beneficial especially in the sintering phase of the manufacturing process.

Various embodiments according to the present invention are disclosed in the claims as well as in the description. The embodiments and examples recited in the claims and in the description are mutually freely combinable unless otherwise explicitly stated. Throughout the entire description, if any numerical ranges are provided, the ranges include also the endpoint values unless otherwise explicitly stated.

## BRIEF DESCRIPTION OF THE FIGURES

By means of further guidance, figures are included to better appreciate the teaching of the present invention, wherein:

Fig. 1 shows a screenshot of a primary particle size analysis made for a scanning electron microscope (SEM) image of a secondary particle obtained in Example 3;
Fig. 2 shows a SEM image of particles obtained in Example 3; and
Fig. 3 shows a SEM image of particles obtained in Comparative Example 3.

## DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The term "a positive electrode active material" (also known as cathode active material) as used herein and in the claims is defined as a material which is electrochemically active in a positive electrode or cathode. By active material, it must be understood to be a material capable to capture and release Li ions when subjected to a voltage change over a predetermined period of time.

The term "a positive electrode" as used herein is defined as a material comprising a positive electrode active material also in addition to other components which are not electrochemically active, in particular conductivity agents such as carbon black or binders such as PVDF.

The term "concentration of $NH_{3(aq)}$" or the like as used herein means the concentration of ammonia in an aqueous solution.

*hydroxide or oxyhydroxide powderous material*

In a first aspect, the present invention concerns a powderous material comprising a hydroxide or oxyhydroxide of one or more metal elements for preparing a positive electrode active material for secondary batteries, wherein the one or more metal elements include at least one of Ni, Co and Mn. In other words, the invention provides a secondary particles-based powderous material compound for preparing a positive electrode active material for secondary batteries, the compound being a M-hydroxide or M-oxyhydroxide, with M comprising, one or more metal elements including at least one of Ni, Co and Mn. According to the present invention. According to the present invention, secondary particles comprises a plurality of primary particles, wherein the material/compound (i.e. precursor) has a median particle size D50 between 3.0 $\mu$m and 20.0 $\mu$m as determined by laser diffraction, wherein said primary particles have a particle-based thickness distribution as determined by measuring primary particle thickness in an image taken by SEM, wherein said thickness distribution has a median thickness between 180 nm and 600 nm, wherein the median particle thickness is a corresponding thickness when a cumulative percentage of the thickness distribution reaches 50%, and wherein the material/compound (i.e. precursor) has a span value (D90-D10)/D50 being at most 0.6, preferably at most 0.4, more preferably at most 0.2.

The corresponding thickness when a cumulative percentage of the thickness distribution reaches 50% may be denoted as p50 in the present application for the sake of easy explanation. Likely, the corresponding thickness when a cumulative percentage of the thickness distribution reaches 75% may be denoted as p75 in the present application. In some embodiments, the thickness distribution has a p50 being between 200 nm and 580 nm, preferably between 220 nm and 570 nm. In some embodiments, the thickness distribution has a p75 being between 225 nm and 800 nm, preferably between 250 nm and 750 nm. The disclosed ranges of p50 and/or p75 may indicate a dense structure of the primary particle. As appreciated by the skilled person the cumulative percentage of the thickness distribution can be measured based on SEM image using a suitable software, for example ImageJ software (ImageJ 1.52a, National Institutes of Health, USA).

In some embodiments, the precursor has a specific surface area inferior or equal to 4.0 m²/g and superior or equal to 1.5 m²/g, preferably inferior or equal to 3.6 m²/g and superior or equal to 1.6 m²/g. As appreciated by the skilled person the specific surface area can be measured, for example, with the Brunauer-Emmett-Teller (BET) method by using, for example, a Quantachrome Monosorb.

In some embodiments, the precursor has a tap density in a range of 2.0-2.2 g/cm³. As appreciated by the skilled person the tap density can be carried out on, for example, an J.Engelsmann Stamping volumeter STAV II instrument.

In some embodiments, the median particle size D50 of the precursor is between 3.2 $\mu$m to 18.0 $\mu$m, preferably between 4.0 $\mu$m to 15.0 $\mu$m. As appreciated by the skilled person the particle size distribution can be analysed by using a Malvern Mastersizer 3000 with a Hydro MV wet dispersion unit after dispersing particles of a sample in an aqueous medium.

In some embodiments, the precursor comprises: the Ni in a content x, wherein x $\geq$ 30.0 mol%, Mn in a content y, wherein 0 $\leq$ y $\leq$ 70.0 mol%, Co in a content z, wherein 0 $\leq$ z $\leq$ 40.0 mol%, Al in a content q, wherein 0 $\leq$ q $\leq$ 10.0 mol%, and one or more additional elements in a content r, wherein the additional elements are elements from the list of B, Ba, Ca, Ce, Cr, Fe, La, Mg, Mo, Nb, S, Si, Sr, Ti, Y, V, W, Zn, and Zr, wherein 0 $\leq$ r $\leq$ 5.0 mol%, wherein x, y, z, q and r are contents expressed as mol% relative to the total molar content ofM, and wherein x + y + z + q + r = 100.0 mol%. The values x,y,z,r are measured by Inductively Coupled Plasma (ICP) method. It can be understood that the expression $\geq 0$ includes the absence of an element. In some embodiments, wherein $x \geq 60$ mol% or $x \geq 70$ mol% or $x \geq 80$ mol% or $x \geq 90$ mol%. In some embodiments, wherein $y \geq 20$ mol% and/or $z \leq 25$ mol%.

*Method*

In a second aspect, the present invention concerns a method for manufacturing a powderous material comprising a hydroxide or oxyhydroxide of one or more metal elements, preferably the powderous material is the powderous material according to the first aspect of the invention. Said hydroxide or oxyhydroxide is suitable for precursors to cathode active materials. Said one or more metal elements include at least one of Ni, Co and Mn. In other words, the invention provdes a method for manufacturing the secondary particles-based powderous material compound according to the first aspect of the invention. The method comprises

- supplying a flow of a metal salt solution comprising the one or more metal elements to a reactor vessel for a time period (T1-T2),
- during the time period (T1-T2), mixing the metal salt solution with an aqueous solution comprising one or more alkali hydroxides and an aqueous solution of ammonia ($NH_{3(aq)}$), thereby precipitating the hydroxide of the one or more metal elements and forming the aqueous slurry comprising the hydroxide or oxyhydroxide particles of the one or more metal elements,
  wherein during the time period (T1-T2), maintaining in the reactor vessel:

  - a range of pH value of the aqueous slurry, the range being superior or equal to 11.5 and inferior or equal to 12.0, preferably superior or equal to 11.6 and inferior or equal to 11.9, wherein the pH value of the aqueous slurry is the pH value as measured on a sample of the aqueous slurry after cooling to 20°C,
  - a concentration of $NH3_{(aq)}$ of superior or equal to 12.0 g/l and preferably inferior or equal to 15.0 g/l, and
  - a temperature of the aqueous slurry which is at least 70°C and which is at most 99 °C;

wherein after the end of the time period (T2) the aqueous slurry in the reactor vessel is further processed by separating a solid fraction from a liquid fraction and drying the solid fraction to obtain the material/compound (i.e. precursor).

As appreciated by the skilled person the pH value can be measured by using a pH meter, for example 780 Metrohm meter. As appreciated by the skilled person the $NH3_{(aq)}$ concentration can be measured by using a commercially available titrator, for example Metrhom 848 Titrino Plus.

During the course of manufacturing process, the precipitated hydroxide may be partially oxidized, depending on the atmosphere of the manufacturing process. Thus, the aqueous slurry may contain oxyhydroxide. Also during drying, the hydroxide or oxyhydroxide particles from the aqueous slurry may be further partially oxidized. It is to be noted that an atmospheric condition is not essential to achieve the claimed invention.

In some embodiments, during the time period T1-T2 a growth rate of precipitated hydroxide in the reactor vessel of at most 0.5 $\mu$m per hour is maintained, more preferably $\leq 0.2$ $\mu$m per hour and even more preferably $\leq 0.1$ $\mu$m per hour.

In some embodiments, before the beginning of the time period T1, an aqueous slurry of seed particles is provided in the reactor vessel. Using of seed particles instead of in-situ seeding process may prevent further nucleation that is less desirable as further nucleation may lead to formation of small particles that tend to agglomerate, which in turn varies the production quality. Also, due to more available crystal surface as the reaction progresses, more material can be fed, without risking to get nucleation. According to the present invention, the use of seed slurry combined with the disclosed precipitation contribute a steady growth of the hydroxide on the seeds, without further nucleation and agglomeration, so that the aqueous slurry contains the hydroxide or oxyhydroxide particles with a homogeneously distributed desired median particle size and the hydroxide or oxyhydroxide particles possess excellent sphericity . The excellent sphericity of the hydroxide or oxyhydroxide particles according to the present invention, when served as precures for cathode material, stay in the cathode material. In other words, the cathode material also has the excellent sphericity. Sphericity is relevant to higher tap density.

In some embodiments, the seed particles are particles of a hydroxide or oxyhydroxide of at least one metal element, preferably the at least one metal element comprising at least Ni. According to the invention, the metal element(s) for seed particles and for the hydroxide or oxyhydroxide particles may be different, which provides further flexibility to implement the method of the invention.

In some embodiments of the method according to the present invention, the seed particles have a median particle size D'50, and at the end of the time period T2 the hydroxide or oxyhydroxide particles of the one or more metal elements has a median particle size D50, wherein the ratio D50/ D'50 is at least 2.00 and preferably at least 3.00. The larger the D50/ D'50 ratio, the better the sphericity of the hydroxide or oxyhydroxide particle may be obtained. In some embodiments, D'50 which is at least 0.10 $\mu$m and at most 3.0 $\mu$m. In some embodiments, D'50 is at least 0.70 $\mu$m and at most 3.00 $\mu$m, and D50 is at least 3.0 $\mu$m and preferably at most 5.0 $\mu$m. In some embodiments, D'50 is at least 3.0 $\mu$m and at most 5.0 $\mu$m, and D50 is at least 8.0 $\mu$m. In some embodiments, D50 is at most 15.0 $\mu$m, preferably at most 13.0 $\mu$m, and more preferably at most 12.0 $\mu$m.

In some embodiments, D'50 is at least 0.70 $\mu$m and at most 4.00 $\mu$m, and D50 is at least 4.0 $\mu$m and preferably at most 18.0 $\mu$m. In some embodiments, D'50 is at least 4.0 $\mu$m and at most 8.0 $\mu$m, and D50 is at least 9.0 $\mu$m. In some embodiments, D50 is at most 20.0 $\mu$m

The method for determining the particle size distribution is not particularly limited. However, for example, the size distribution can be determined based on the integrated volume value that is measured using a laser diffraction and scattering type particle size analyzer. As the average particle size, it is possible to use percentile values D10, D50, and D90 as the value of the particle diameter at 10%, 50% and 90%, respectively, in the cumulative distribution and a span value of (D90-D10)/D50 as a measure of distribution range.

In some embodiments, the metal salt solution has a flow rate expressed as a volume per unit of time, wherein the flow rate at the time instant (t) is expressed by equation 1:

$$f_{flow\ rate}(t) = \frac{m_1 \left( \left( \frac{G(t) \cdot \Delta t + D'50}{D'50} \right)^3 - 1 \right) \cdot M_{Me}}{\Delta t \cdot c_{Me} \cdot M_{Me(OH)_2}} \qquad (equation\ 1)$$

wherein $m_1$ is a mass of the seed particles provided in the reactor vessel, $G(t)$ is a growth rate of the hydroxide or oxyhydroxide particle at the time instant $t$, wherein the value of $G(t)$ is greater than 0, $\Delta t$ is the time period T1-T2, $D'50$ the median particles size of the seed particles, and $M_{Me}$ is a molar mass of the one or more metal elements, $c_{Me}$ is the concentration of the one or more metal elements and $M_{Me(OH)2}$ is a molecular mass of the hydroxide or oxyhydroxide of the one or more metal elements, preferably the value of $G(t)$ is smaller or equal to 1.5 um/h, more preferably smaller or equal to 1.0 um/h. In some embodiments the value of G(t) is smaller or equal to 0.5 um/h. In some embodiments the value of G(t) is smaller or equal to 0.1 um/h. Smaller G(t) value may contribute to a lower porosity.

The value of G(t) may vary depending on the embodiment. In some embodiments the value of G(t) is varied during the time period T1-T2.

The upper limit of G(t), that is a maximum growth rate of the hydroxide or oxyhydroxide particles, may be dependent on the characteristics of the feed pump and the characteristics of a removal system of a liquid portion (i.e. mother liquid) of the reaction mixture / aqueous slurry, for instance.

In some embodiments, the value of G(t) in the equation does not change during the time period T1-T2, wherein the flow rate of the metal salt solution increases continuously according to equation 1 and the growth rate of the hydroxide or oxyhydroxide particles in the slurry is constant during the time period T1-T2. As such, by continuously increasing the flow rate of the metal salt solution, a constant growth rate of the median particle size of the hydroxide or oxyhydroxide may be obtained. In other words, it may be possible to make the precipitation process more steady and controllable. This is especially the case when a target median particle size is large, such as at least 10 $\mu$m. While other factors stay constant, with the continuously increase of the flow rate, the precipitation time may be saved up to half or even one fourth compared to otherwise similar process but where the metal salt solution is fed at a constant rate throughout the precipitation process.

In some embodiments, the temperature of the aqueous slurry in the reactor vessel of at least 75°C, and preferably of at least 80°C, more preferably of at least or equal to 85°C; and/or the temperature is at most 99 °C, preferably at most 95°C, and more preferably at most 90°.

In some embodiments, during the time period T1-T2 the $NH3_{(aq)}$ concentration is maintained superior or equal to 7.0 g/l, preferably superior or equal to 9.0 g/l, more preferably superior or equal to 11.0 g/l. The disclosed $NH_{3(aq)}$ concentrations may facilitate a slower growth of particle size (i.e. slower precipitation), which leads to a more dense structure of the particle.

In some embodiments, the one or more metal elements in the metal salt solution include: Ni in a content b, wherein b ≥ 30.0 mol%, Mn in a content c, wherein 0 ≤ c ≤ 70.0 mol%, Co in a content d, wherein 0 ≤ d ≤ 40.0 mol%, Al in a content q, wherein 0 ≤ e ≤ 10.0 mol%, and one or more additional elements in a content f, wherein the additional elements are elements from the list of B, Ba, Ca, Ce, Cr, Fe, La, Mg, Mo, Nb, Si, Sr, Ti, Y, V, W, Zn, and Zr, wherein 0 ≤ f ≤ 5.0 mol%, and wherein b, c, d, e and f are contents expressed as mol% relative to M, and wherein b+c+d+e+f = 100 mol%. wherein the values b,c,d,e are measured by Inductively Coupled Plasma (ICP) method. It can be understood that the expression ≥0 includes the absence of an element. In some embodiments, b ≥ 60 mol% or b ≥ 70 mol% or b ≥ 80 mol% or b ≥ 90 mol% and/or b ≤ 99.0 mol%. In some embodiments, wherein c ≥ 20 mol% and/or d≤ 25 mol%.

*Product-by-process*

In a third aspect the invention concerns the hydroxide or oxyhydroxide powderous material obtainable by the method according to the second aspect of the invention. In other words, the invention also provides a secondary particles-based powderous material compound obtained by the method according to the second aspect of the invention, preferably the compound is the secondary particles-based powderous material compound according to the first aspect of the invention. As appreciated by the skilled person all embodiments directed to the hydroxide or oxyhydroxide powderous material according to the first aspect of the invention and/or the method according to the second aspect of the invention apply *mutatis mutandis* to the hydroxide or oxyhydroxide powderous material obtainable by the method according to the invention.

*Positive electrode active material*

In a fourth aspect the invention concerns a method of manufacturing a positive electrode active material, comprising the steps of:

- Mixing a powderous material comprising a hydroxide or oxyhydroxide of one or more metal elements, i.e secondary particles-based powderous material compound, according to the first aspect of the invention, a lithium source, and a optionally dopant source to obtain a mixture,
- Heating the mixture in oxidizing atmosphere at a temperature between 650°C to 1000°C to obtain the positive electrode active material, and optionally
- the method further comprising a heat treatment step before the mixing, wherein the powderous material is heated at a temperature of 105 °C to 750 °C.

*Use*

In a fifth aspect the present invention concerns a use of the hydroxide or oxyhydroxide powderous material according to the first aspect of the invention and/or the hydroxide or oxyhydroxide powderous material obtainable by the method according to the second aspect of the invention in a positive electrode active material.

## EXAMPLES

The present invention is further illustrated with reference to some examples and comparative examples. In all of the examples, a pH value refers to a value measured at a temperature of 20 °C. Further, in all of the processes of the examples a reducing atmosphere was ensured by applying a flow of nitrogen gas into the reactor vessel during the precipitation reaction except as otherwise indicated.

Measurement methods used in the examples

**A) pH analysis**

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

**B) $NH_{3(aq)}$ concentration analysis**

The $NH3_{(aq)}$ concentration was measured from a reactor sample by end point titration using an instrument of Metrhom 848 Titrino Plus. One milliliter of sample solution was added to a titration vessel. 30-40 ml of deionized water and 1 ml of 1M NaOH were added. Sample was titrated to the end point by 0.1M HCl.

**C) Solid content analysis**

For the determination of the solid content of precipitated hydroxide in the aqueous slurry, a sample taken from the aqueous slurry (the "reaction mixture" in the examples) was mixed well and 10-30 ml of the mixed sample was pipetted onto the filter paper that was further filtered onto a washed and weighed 0,8 um membrane. The filtered membrane was rinsed with DI water followed by drying and measuring the weight of the dried membrane from which the solid content, expressed as weight of the dried hydroxide per liter of the aqeous slurry in g/l was calculated.

**D) Surface area analysis**

The specific surface area (SA) of the example samples was measured with the Brunauer-Emmett-Teller (BET) method by using a Quantachrome Monosorb. A powder sample was put int the sample tube and heated at 90 °C under a nitrogen ($N_2$) gas for 2 hours prior to the measurement in order to remove adsorbed species. The sample was then de-gassed at room temperature for five minutes. The instrument performed the nitrogen adsorption test at 77 K. By obtaining the nitrogen isothermal absorption/desorption curve, the total specific surface area of the sample in $m^2/g$ was derived.

**E) Tap density analysis**

The tap density (TD) measurement of the example samples was carried out by mechanically tapping a graduated measuring cylinder (100 ml) containing the sample (having a mass W, around 60-120 g). After observing the initial powder volume, the measuring cylinder was mechanically tapped for 15 mins, so that no further volume (V in $cm^3$) or mass (W) change was observed. The TD was calculated as TD = W/V. The TD measurement was carried out on an J.Engelsmann Stamping volumeter STAV II instrument.

**F) Seondary particle size distribution (PSD) analysis**

PSD of the secondary particle was measured using a Malvern Mastersizer 3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. Percentile values D10, D50, and D90 are the value of the particle diameter at 10%, 50% and 90%, respectively, in the cumulative distribution. A span value of the hydroxide is a value of (D90-D10)/D50.

**G) Metal content analysis**

The metal content of the hydroxides were measured by the Inductively Coupled Plasma - Optical Emission Spectrometry (ICP-OES) method using an Agilent ICP 720-OES instrument. 1 gram of a powder sample of each example was dissolved into 50 mL of high purity hydrochloric acid in an Erlenmeyer flask. The flask was covered by a watch glass and heated on a hot plate at 380 °C until complete dissolution of the sample. After being cooled to room temperature, the solution and the rinsing water of Erlenmeyer flask were transferred to a 250 mL volumetric flask. Afterwards, the volumetric flask was filled with deionized (DI) water up to the 250 mL mark, followed by complete homogenization. An appropriate amount of the solution was taken out by a pipette and transferred into a 250 mL volumetric flask for the second dilution, where the volumetric flask was filled with the internal standard and 10% hydrochloric acid up to the 250 mL mark and then homogenized. Finally, this solution was used for the ICP-OES measurement. The contents of metals, such as Ni, Mn, and Co, are expressed as mol% of the total metal content in the measured hydroxide.

**H) Primary particle size analysis**

The thickness of primary particle was calculated by using ImageJ software (ImageJ 1.52a, National Institutes of Health, USA) according to the following steps:

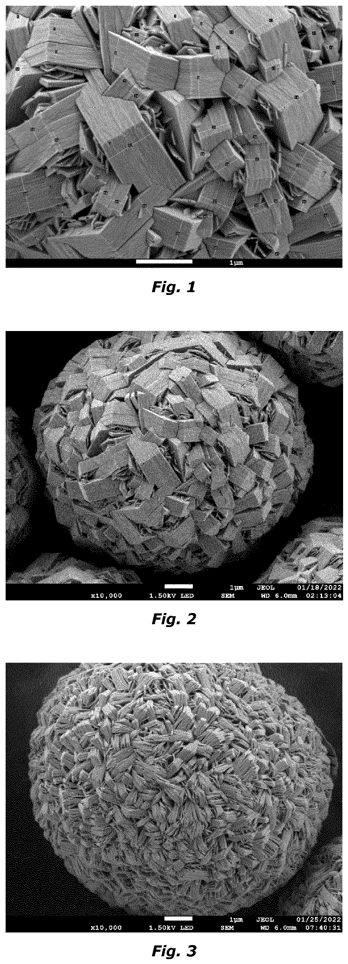

Step 1) Open the file containing SEM image of hydroxide material with 20,000 times magnification.
Step 2) Set scale according to the SEM magnification.
Step 3) Select Straight tool and place the line on the primary particle perpendicular with the orientation of the primary particle.
Step 4) Measure the thickness of the primary particles selected from Set Measurements and Area box. Thickness is indicated in the Length column.
Step 5) Repeat process 3 and 4 to randomly selected 90 particles in one image. Additional SEM image can be used if the number of particles in one image is less than 90. Figure 1 shows the example of measurement of EX1.
Step 6) Process the data in Microsoft Excel or any number processing software according to the below steps which is illustrated in Table 1:

    a. Sort the primary particle thickness from lowest to highest in the "Thickness" column
    b. Calculate the fraction of each thickness contribution to the total sum of thickness in the "Fraction of total" column
    c. Calculate the cumulative fraction in the "cumulative" column
    d. Calculate p50 and p75 each by linear line equation y = mx + c from the two closest cumulative number.

Table 1 Example of p50 and p75 measurement for the dried hydroxide obtained in EX1

| Particle number | Thickness ($\mu$m) | Fraction of total (%) | Cumulative (%) | |
|---|---|---|---|---|
| 1 | 18.2 | =18.222044.4×100% = 18.222044.4×100% = 0.08% | =0.08 | |
| 2 | 22.1 | 0.10 | =0.08+0.10 = 0.18 | |
| 3 | 26.6 | 0.12 | =0.18+0.12 = 0.30 | |
| ⋮ | ⋮ | ⋮ | ⋮ | |
| 69 | 374.3 | 1.70 | 46.47 | |
| 70 | 386.6 | 1.75 | 48.22 | p50 = 397.6nm |
| 71 | 397.8 | 1.80 | 50.03 | |
| ⋮ | ⋮ | ⋮ | ⋮ | |
| 81 | 589.1 | 2.67 | 71.37 | |
| 82 | 605.6 | 2.75 | 74.12 | P75 = 610.8nm |
| 83 | 622.2 | 2.82 | 76.94 | |
| ⋮ | ⋮ | ⋮ | ⋮ | |
| 90 | 913.7 | 4.14 | 100.00 | |
| | | | | |
| Total | 22044.4 | 100.00 | | |

**I) Surface base analysis**

In the measurement of soluble base content by pH titration, two steps are performed: (a) the preparation of solution, and (b) pH titration. The detailed explanation of each step is as follows: Step (a): The preparation of solution: powder is immersed in deionized water and stirred for 10 min in a sealed glass flask containing 100 mL of deionized water. The amount of positive electrode active material powder is 4 grams. After stirring, to dissolve the base, the suspension of powder in water is filtered to get a clear solution.

Step (b): pH titration: 90 mL of the clear solution prepared in step (a) is used for pH titration by using 0.1M HCl. The flow rate is 0.5 mL/min and the pH value is recorded each 3 seconds. The pH titration profile (pH value as a function of added HCl) shows two clear equivalence (or inflection) points. The first equivalence point (corresponding to a HCl quantity of EP1) at around pH 7.4 results from the reaction of $OH^-$ and $CO_3^{2-}$ with $H^+$. The second equivalence point (corresponding to a HCl quantity of EP2) at around pH 4.7 results from the reaction of $HCO3^-$ with $H^+$. It is assumed that the dissolved base in deionized water is either LiOH (with a quantity 2*EP1-EP2) or $Li_2CO_3$ (with a quantity 2*(EP2-EP1)). The obtained values for LiOH and $Li_2CO_3$ are the result of the reaction of the surface with deionized water.

**3) Moisture analysis**

The moisture content of the positive electrode active material powder is measured by Karl Metrohm Fischer Coulometer. 1 gram of the positive electrode active material powder is placed in the 200°C KF furnace. The evaporated moisture is guided into the KF reactor and analyzed by KF coulometry.

**Comparative Example 1**

Positive electrode active material CEX1.1 was prepared through a solid-state reaction between a lithium source and a precursor according to the following steps:

1. **Precursor A preparation:** A starting solution was prepared by placing 2.0 L of DI water, 15 mL of 220 g/L $NH3_{(aq)}$ in a 3.65 L reactor and adjusting the temperature in the reactor vessel to 65 °C and kept at this temperature throughout the process. pH of the starting solution was adjusted by adding 230 g/L $NaOH_{(aq)}$ solution to a value of 12.9.

Next, a precipitation reaction was performed by adding metal sulfate solutions of 129 g/L $NiSO_{4(aq)}$, 80 g/L $MnSO_{4(aq)}$, and 80 g/L $CoSO_{4(aq)}$, 220 g/L $NH3_{(aq)}$, and 230 g/L $NaOH_{(aq)}$ solution were, while mixing with a power density of around 30 $kW/m^3$ for the first 20 hours and with a power density of around 10 $kW/m^3$ for the rest of the process. The metal sulfate solutions were each added by using separate pumps through a static mixer. The amount of Ni:Mn:Co were 98:2:0 at the beginning of the process and gradually changing to 74.1:20.3:5.6 towards the end of the precipitation process. During the reaction a feed rate of the NaOH solution was adjusted so that a pH value of the reaction mixture in the reactor vessel was kept steady at 11.6 to 11.8 and a feed rate of the $NH3_{(aq)}$ was adjusted so that a $NH_3$ concentration in the reaction mixture was kept steady at 8.0 ± 1 g/L. After 100 min after the start of the reaction it was put on hold and the reaction mixture, i.e. an aqueous slurry, was taken out from the reactor vessel. Then 183 mL of the slurry and 1640 mL of a mother liquid was put back on the reactor and the precipitation was continued. A reactor sample of the reaction mixture was taken every two hours and the D50 was measured from it. The reaction was stopped when the D50 of the reactor sample reached approximately the target value of around 10 μm, a duration of the process was 56 h. A part of a liquid fraction of the reaction mixture was pumped out from the reactor during the process by using a concentrator to obtain a slurry with a solid content of 1100 g/L.
The aqueous slurry of metal hydroxides obtained were filtered and washed with 220 g/L $NaOH_{(aq)}$ solution and 60°C DI water. The filter cakes were dried in the oven at 120 °C for 12 hours to obtain precursor A having total metal composition of $Ni_{0.85}Mn_{0.10}Co_{0.05}$.

2. **Mixing:** precursor A prepared from Step 1) was mixed with LiOH and $Nb_2O_5$ in an industrial blender to obtain a first mixture having 1 mol% Nb and lithium to metal ratio of 1.01.
3. **Heating:** the mixture from Step 2) was heated at 705°C for 12 hours under an oxygen atmosphere, followed by grinding and sieving, to obtain CEX1.1.

Positive electrode active material CEX1.2 was prepared according to the same method as CEX1.1, except that the heating temperature in Step 3) was 755°C.

**Example 1**

Positive electrode active material EX1.1 was prepared through a solid-state reaction between a lithium source and a precursor according to the following steps:

1. **Precursor B preparation:** Precursor B was prepared according to the same method as precursor A prepared in CEX1 except for keeping the temperature in the reactor vessel at 85 °C.
2. **Mixing:** precursor B prepared from Step 1) was mixed with LiOH and $Nb_2O_5$ in an industrial blender to obtain a first mixture having 1 mol% Nb and lithium to metal ratio of 1.01.
3. **Heating:** the mixture from Step 2) was heated at 705°C for 12 hours under an oxygen atmosphere, followed by grinding and sieving, to obtain EX1.1.

Positive electrode active material EX1.2 was prepared according to the same method as EX1.1, except that the heating temperature in Step 3) was 755°C.

**Comparative Example 2**

Positive electrode active material CEX2.1 was prepared through a solid-state reaction between a lithium source and a precursor according to the following steps:

1. **Precursor C preparation:** A starting solution was prepared by placing 6 L of DI water, 160 mL of 220 g/L $NH3_{(aq)}$, and 100 mL of 440 g/L aqueous slurry comprising seeds particles of $Ni_{0.94}Mn_{0.03}Co_{0.03}(OH)_2$ having D50 of 5.0 μm were added in a 10 L reactor vessel and adjusting the temperature in the reactor vessel to 75 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 94: 3: 3), 220 g/L $NH3_{(aq)}$, and 230 g/L $NaOH_{(aq)}$ solution, while mixing with a power density of around 30 $kW/m^3$ for the first 6 hours and with a power density of around 20 $kW/m^3$ for the rest of the process step. A feed rate of the metal sulfate solution was 135 mL/h in the beginning and increased continuously all the time to keep the particle growth rate constant at 0.4 $\mu$m/h. During the reaction a feed rate of the $NaOH_{(aq)}$ solution was adjusted so that a pH value of the reaction mixture in the reactor vessel was kept steady at 11.2 $\pm$ 0.1 and a feed rate of the $NH3_{(aq)}$ was adjusted so that a $NH_3$ concentration in the reaction mixture was kept steady at 5.0 $\pm$ 1 g/L. A reactor sample of the reaction mixture was taken every two hours and the D50 was measured from it. The reaction was stopped when the D50 of the reactor sample reached approximately the target value of 10.0 $\mu$m, a duration of the process was 12 h. A part of a liquid fraction of the reaction mixture was pumped out from the reactor during the process by using an external concentrator and a solid content of the reaction mixture in the reactor vessel was around 390 g/L in the end of the process.
The aqueous slurry of metal hydroxides obtained were filtered and washed with 220 g/L NaOH solution and 60°C DI water. The filter cakes were dried in the oven at 120 °C for 12 hours to obtain precursor C.

2. **Mixing:** precursor C prepared from Step 1) was mixed with LiOH, NbzOs, and $Al_2O_3$ in an industrial blender to obtain a first mixture having 0.52 mol% Nb, 0.5 mol% Al, and lithium to metal ratio of 1.03.
3. **Heating:** the mixture from Step 2) was heated at 700°C for 12 hours under an oxygen atmosphere, followed by grinding and sieving, to obtain CEX2.1.

Positive electrode active material CEX2.2 was prepared according to the same method as CEX2.1, except that the heating temperature in Step 3) was 720°C.
Positive electrode active material CEX2.3 was prepared according to the same method as CEX2.1, except that the heating temperature in Step 3) was 740°C.

**Example 2**

Positive electrode active material EX2.1 was prepared through a solid-state reaction between a lithium source and a precursor according to the following steps:

1. **Precursor D preparation:** A starting solution was prepared by placing 6 L of DI water, 350 mL of 220 g/L $NH3_{(aq)}$, and 400 mL of 440 g/L aqueous slurry comprising seeds particles of $Ni_{0.94}Mn_{0.03}Co_{0.03}(OH)_2$ having D50 of 5.0 $\mu$m were added in a 10 L reactor vessel and adjusting the temperature in the reactor vessel to 85°C and kept at this temperature throughout the process.

Next, a precipitation reaction was performed by adding 120 g/L metal sulfate solution comprising Ni, Mn, and Co (in a stoichiometric molar ratio, Ni:Mn:Co of 94:03:03), 220 g/L $NH3_{(aq)}$, and 230 g/L $NaOH_{(aq)}$ solution, while mixing with a power density of around 30 kW/m3 for the first 6 hours and with a power density of around 20 kW/m3 for the rest of the process step. A feed rate of the metal sulfate solution was 540 mL/h in the beginning and increased continuously all the time to keep the particle growth rate constant at 0.5 $\mu$m/h. During the reaction a feed rate of the NaOH solution was adjusted so that a pH value of the reaction mixture in the reactor vessel was kept steady at 11.7 $\pm$ 0.1 and a feed rate of the $NH3_{(aq)}$ was adjusted so that a $NH_3$ concentration in the reaction mixture was kept steady at 12.0 $\pm$ 1 g/L. A reactor sample of the reaction mixture was taken every two hours and the D50 was measured from it. The reaction was stopped when the D50 of the reactor sample reached approximately the target value of 10.0 $\mu$m, a duration of the process was 11 h. A part of a liquid fraction of the reaction mixture was pumped out from the reactor during the process by using an external concentrator and a solid content of the reaction mixture in the reactor vessel was around 180 g/L in the end of the process.
The aqueous slurry of metal hydroxides obtained were filtered and washed with 220 g/L $NaOH_{(aq)}$ solution and 60°C DI water. The filter cakes were dried in the oven with 120 °C for 12 hours to obtain precursor D.

2. **Mixing:** precursor D prepared from Step 1) was mixed with LiOH, $Nb_2O_5$, and $Al_2O_3$ in an industrial blender to obtain a first mixture having 0.52 mol% Nb, 0.5 mol% Al, and lithium to metal ratio of 1.03.
3. **Heating:** the mixture from Step 2) was heated at 700°C for 12 hours under an oxygen atmosphere, followed by grinding and sieving, to obtain EX2.1.

Positive electrode active material EX2.2 was prepared according to the same method as EX2.1, except that the heating temperature in Step 3) was 720°C.
Positive electrode active material EX2.3 was prepared according to the same method as EX2.1, except that the heating temperature in Step 3) was 740°C.

Comparative example 3: **Precursor E preparation**

A starting solution was prepared by placing 6 L of DI water, 150 mL of 220 g/L $NH_3$(aq), and 500 mL of 800 g/L aqueous slurry comprising seed particles of $Ni_{0.65}Mn_{0.15}Co_{0.20}(OH)_2$ having D50 of 4.0 $\mu$m were added in a 10 L reactor vessel and adjusting the temperature in the reactor vessel to 65 °C and kept at this temperature throughout the process. The slurry of the seed particles of $Ni_{0.65}Mn_{0.15}Co_{0.20}(OH)_2$ having D50 of 4.0 $\mu$m was prepared similarly as described hereinabove.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, while mixing with a power density of around 30 $kW/m3$ for the first 6 hours and with a power density of around 20 $kW/m^3$ for the rest of the process step. A feed rate of the metal sulfate solution was 375 mL/h in the beginning and increased continuously all the time to keep the particle theoretical constant growth rate at 0.25 $\mu$m/h. During the reaction a feed rate of the NaOH solution was adjusted so that a pH value of the reaction mixture in the reactor vessel was kept steady at 11.4 $\pm$ 0.1 and a feed rate of the NH3(aq) was adjusted so that a $NH3_{(aq)}$ concentration in the reaction mixture was kept steady at 4.0 $\pm$ 1 g/L. A reactor sample of the reaction mixture was taken every two hours and the D50 was measured from it. The process step was stopped when the D50 of the reactor sample reached approximately the target value of 10.2 $\mu$m, a duration of the process step was 28.5 h. A part of a liquid fraction of the reaction mixture was pumped out from the reactor during the process step by using a concentrator and a solid content of the reaction mixture in the reactor vessel was around 700 g/L in the end of the process step.

Example 3: **Precursor F preparation**

A starting solution was prepared by placing 6 L of DI water, 350 mL of 220 g/L $NH_3$(aq), and 500 mL of 800 g/L aqueous slurry comprising seed particles of $Ni_{0.65}Mn_{0.15}Co_{0.20}(OH)_2$ having D50 of 4.0 $\mu$m were added in a 10 L reactor vessel and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, while mixing with a power density of around 30 $kW/m^3$ for the first 6 hours and with a power density of around 20 $kW/m^3$ for the rest of the process. A feed rate of the metal sulfate solution was 600 mL/h in the beginning and increased continuously all the time according to equation 1 disclosed hereinabove to keep the particle growth rate constant at 0.4 $\mu$m/h (i.e. G(t) = 0.4 $\mu$m/h). During the reaction a feed rate of the NaOH solution was adjusted so that a pH value of the reaction mixture in the reactor vessel was kept steady at 11.8 $\pm$ 0.1 and a feed rate of the NH3(aq) was adjusted so that a $NH3_{(aq)}$ concentration in the reaction mixture was kept steady at 12.0 $\pm$ 1 g/L. A reactor sample of the reaction mixture was taken every two hours and the D50 was measured from it. The reaction was stopped when the D50 of the reactor sample reached approximately the target value of 10.2 $\mu$m, a duration of the process was 15 h. A part of a liquid fraction of the reaction mixture was pumped out from the reactor during the process by using an concentrator and a solid content of the reaction mixture, which is an aqueous slurry comprising hydroxide particles, in the reactor vessel was around 780 g/L in the end of the process.

Preparation of the aqueous slurry comprising seed particles of $Ni_{0.65}Mn_{0.15}Co_{0.20}(OH)2$

A starting solution was prepared by placing 6 L of DI water, 55 mL of 220 g/L $NH_3$(aq), and 300 mL of 130 g/L aqueous slurry comprising seed particles of $Ni(OH)_2$ having D50 of 1.2 $\mu$m in a 10 L reactor vessel and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, while mixing with a power density of around 30 $kW/m^3$ for the first 30 hours and with a power density of around 20 $kW/m^3$ for the rest of the process step. A feed rate of the metal sulfate solution was 450 mL/h for the first two hours and 980 mL/h for the rest of the process step to keep the particle theoretical growth rate averagely at 0.08 $\mu$m/h. During the reaction the NaOH solution was added so that a pH value of the reaction mixture in the reactor vessel was kept steady at 11.8 $\pm$ 0.1 and a feed rate of the $NH_3$(aq) was adjusted so that a $NH3_{(aq)}$ concentration of the reaction mixture was kept at 2 to 3 g/L. A reactor sample of the reaction mixture was taken every two hours and the D50 was measured from it. The process step was stopped when the D50 of the reactor sample reached the target value of 4.0 $\mu$m, a duration of the process step was 36 h. A part of a liquid fraction of the reaction mixture was pumped out from the reactor during the process step by using an concentrator and a solid content of the reaction mixture in the reactor vessel was around 800 g/L in the end of the process.

Preparation of the aqueous slurry comprising seed particles of Ni(OH)$_2$

A starting solution was prepared by placing 100 L of DI water and 1.0 L of 220 g/L aqueous solution of ammonia (NH$_3$(aq)) in a 200 L reactor vessel and adjusting the reactor temperature to 55 °C and kept at this temperature throughout the process. 5.5 M NaOH solution was added so that a pH value of the starting solution in the reactor vessel was adjusted to 12.6-12.8.

Next, 2 M NiSO$_4$ solution with a feed rate of 30 L/h, 220 g/L NH$_3$(aq) with a feed rate of 0.52 L/h, and 5.5 M NaOH solution were added continuously in the reactor vessel. A precipitation reaction was established and maintained by mixing the solutions with a mixer with a power density around 35 kW/m$^3$ and adding the NaOH solution so that the pH in the reactor was kept at 12.6 to 12.8, so as to prepare a reaction mixture, an aqueous slurry. A NH3$_{(aq)}$ concentration in the reaction mixture was kept around 2 g/L. The reaction was done in a continuous mode. When the reaction reached a stable state, around 30 hours after the start, a reaction resultant, i.e. the aqueous slurry of hydroxide of nickel, NiOH$_2$, (i.e. seed particles) having D50 of 1.2 μm, was collected from the overflow of the reactor vessel.

Dry products of the examples

The reaction mixtures, i.e. the aqueous slurries of metal hydroxides obtained in all of the examples, were filtered and washed with 220 g/L NaOH solution and 60°C DI water. The filter cakes were dried in the oven with 120 °C for 12 hours.

**Results**

Table 2. Summary of the properties of precursor

| Precursor | Composition (mol%) | | | D50 (μm) | span [(D90-D10)/ D50] | Tap density (g/m$^3$) | Surface area (m$^2$/g) | Primary particle thickness (nm) | |
|---|---|---|---|---|---|---|---|---|---|
| | Ni | Mn | Co | | | | | p50 | p75 |
| A | 85 | 10 | 5 | 10.2 | 0.21 | 2.02 | 7.49 | 93.3 | 120.0 |
| B | 85 | 10 | 5 | 9.0 | 0.18 | 2.02 | 4.0 | 279.1 | 399.6 |
| C | 94 | 3 | 3 | 10.6 | 0.35 | 1.97 | 6.35 | 75.6 | 94.7 |
| D | 94 | 3 | 3 | 10.2 | 0.40 | 1.98 | 3.8 | 253.3 | 341.8 |
| E | 65 | 15 | 20 | 9.9 | 0.23 | 2.08 | 5.32 | 125.4 | 172.3 |
| F | 65 | 15 | 20 | 10.2 | 0.51 | 2.17 | 2.4 | 397.6 | 610.8 |

Table 3. Summary of the properties of positive electrode active material in examples and comparative examples

| Precursor | ID | Ni (mol%) | Heating (°C) | Total base (μmol/g) | Moisture (ppm) |
|---|---|---|---|---|---|
| A | CEX1.1 | 85 | 705 | 427 | 1982 |
| | CEX1.2 | 85 | 755 | 400 | 2040 |
| B | EX1.1 | 85 | 705 | 277 | 1409 |
| | EX1.2 | 85 | 755 | 271 | 1273 |
| C | CEX2.1 | 94 | 700 | 523 | 419 |
| | CEX2.2 | 94 | 720 | 521 | 322 |
| | CEX2.3 | 94 | 740 | 459 | 306 |
| D | EX2.1 | 94 | 700 | 420 | 284 |
| | EX2.2 | 94 | 720 | 443 | 295 |
| | EX2.3 | 94 | 740 | 402 | 276 |

Table 2 summarizes properties of precursor. Precursor B, precursor D and precursor F show significantly thicker primary particle in comparison with precursor A, precursor C and precursor E as indicated by p50 and p75 number. Precursor B, precursor D and precursor F show significantly smaller surface area in comparison with precursor A, precursor C and precursor E. Each of precursor A to D is lithiated into positive electrode active material which properties are summarized in table 3.

The total base and moisture uptake indicating unwanted surface impurity which cause problem during application of positive electrode active material in an electrochemical cell, such as gelation during slurry formation and gassing during cycling.

The same observation is applied for CEX2.1 to CEX2.3 with EX2.1 to EX2.3 which are a positive electrode active material having Ni content around 94 mol%.

**Claims**

1. A secondary particles-based powderous material compound for preparing a positive electrode active material for secondary batteries, the compound being a M-hydroxide or M-oxyhydroxide, with M comprising, one or more metal elements including at least one of Ni, Co and Mn,

   wherein said secondary particles comprise a plurality of primary particles,
   wherein the compound has a median particle size D50 between 3.0 $\mu$m and 20.0 $\mu$m as determined by laser diffraction,
   wherein said primary particles have a particle-based thickness distribution as determined by measuring primary particle thickness in an image taken by SEM, wherein said thickness distribution has a median thickness between 180 nm and 600 nm, and
   wherein the compound has a span value (D90-D10)/D50 being at most 0.6, preferably at most 0.4, more preferably at most 0.2.

2. The compound according to claim 0, wherein the thickness distribution has a corresponding thickness when a cumulative percentage reaches 75% being between 225 nm and 800 nm, preferably being between 250 nm and 750 nm.

3. The compound according to any of previous claims, having a tap density in a range of 1.5-2.5 g/cm$^3$, preferably between 1.8-2.3 g/cm$^3$.

4. The compound according to any of the previous claims, comprising:

   - Ni in a content x, wherein x $\geq$ 30.0 mol%,
   - Mn in a content y, wherein 0 $\leq$ y $\leq$ 70.0 mol%,
   - Co in a content z, wherein 0 $\leq$ z $\leq$ 40.0 mol%,
   - Al in a content q, wherein 0 $\leq$ q $\leq$ 10.0 mol%, and
   - one or more additional elements in a content r, wherein the additional elements are elements from the list of B, Ba, Ca, Ce, Cr, Fe, La, Mg, Mo, Nb, S, Si, Sr, Ti, Y, V, W, Zn, and Zr, wherein 0 $\leq$ r $\leq$ 5.0 mol%,

   wherein x, y, z, q and r are contents expressed as mol% relative to the total molar content of M, and wherein x + y + z + q + r = 100.0 mol%.

5. The compound according to claim 4, wherein x $\geq$ 60 mol% or x $\geq$ 70 mol% or x $\geq$ 80 mol% or x $\geq$ 90 mol%; and/or wherein y $\geq$ 20 mol% and/or z $\leq$ 25 mol%.

6. The compound according to any of the previous claims, wherein the median particle size D50 is between 4.0 $\mu$m to 15.0 $\mu$m.

7. The compound according to any of the previous claims, wherein the compound has a specific surface area inferior or equal to 4.0 m$^2$/g and superior or equal to 1.5 m$^2$/g, preferably inferior or equal to 3.6 m$^2$/g and superior or equal to 1.6 m$^2$/g.

8. A method for manufacturing the secondary particles-based powderous material compound according to any of claims 0 to 7, wherein the method comprises:

- supplying a flow of a metal salt solution comprising the one or more metal elements to a reactor vessel for a time period (T1-T2),
- during the time period (T1-T2), mixing the metal salt solution with an aqueous solution comprising one or more alkali hydroxides and an aqueous solution of ammonia ($NH_{3(aq)}$), thereby forming the aqueous slurry comprising hydroxide or oxyhydroxide particles of the one or more metal elements,

wherein during the time period (T1-T2), maintaining in the reactor vessel:

- a range of pH value of the aqueous slurry, the range being superior or equal to 11.5 and inferior or equal to 12.0, preferably superior or equal to 11.6 and inferior or equal to 11.9, wherein the pH value of the aqueous slurry is the pH value as measured on a sample of the aqueous slurry after cooling to 20°C,
- a concentration of $NH3_{(aq)}$ of superior or equal to 5.0 g/l and preferably inferior or equal to 15.0 g/l, and
- a temperature of the aqueous slurry which is at least 70 °C and which is at most 99 °C,

wherein after the end of the time period (T2) the aqueous slurry in the reactor vessel is further processed by separating a solid fraction from a liquid fraction and drying the solid fraction to obtain the secondary particles-based powderous material compound.

9. The method according to claim 8, wherein during the time period (T1-T2) a growth rate of precipitated hydroxide in the reactor vessel of at most 0.5 $\mu$m per hour is maintained, more preferably $\leq$0.2 $\mu$m per hour and even more preferably $\leq$0.1 $\mu$m per hour.

10. The method according to claim 8 or 9, wherein before the beginning of the time period (T1), an aqueous slurry of seed particles is provided in the reactor vessel, preferably the seeds in the seed slurry have a particle size distribution, as determined by laser diffraction, with a median particle size D'50 which is at least 0.10 $\mu$m and at most 3.0 $\mu$m.

11. The method according to claim 10, wherein the metal salt solution has a flow rate expressed as a volume per unit of time, wherein the flow rate at the time instant (t) is expressed by equation 1:

$$f_{flow\,rate}(t) = \frac{m_1\left(\left(\frac{G(t) \cdot \Delta t + D'50}{D'50}\right)^3 - 1\right) \cdot M_{Me}}{\Delta t \cdot c_{Me} \cdot M_{Me(OH)_2}} \qquad (equation\ 1)$$

wherein $m_1$ is a mass of the seed particles provided in the reactor vessel, $G(t)$ is a growth rate of the hydroxide or oxyhydroxide particle at the time instant t, wherein the value of $G(t)$ is greater than 0, $\Delta t$ is the time period (T1-T2), $D'50$ the median particles size of the seed particles, and $M_{Me}$ is a molar mass of the one or more metal elements, $c_{Me}$ is the concentration of the one or more metal elements and $M_{Me(OH)2}$ is a molecular mass of the hydroxide or oxyhydroxide of the one or more metal elements, preferably the value of $G(t)$ is smaller or equal to 1.5 um/h, more preferably smaller or equal to 1.0 um/h.

12. The method according to any of claim 8 to 11, wherein the temperature of the aqueous slurry in the reactor vessel of at least 75°C, and preferably of at least 80°C, more preferably of at least or equal to 85°C; and/or the temperature is at most 99 °C, preferably at most 95°C, and more preferably at most 90°and/or
wherein during the time period (T1-T2) the $NH3_{(aq)}$ concentration is maintained superior or equal to 7.0 g/l, preferably superior or equal to 9.0 g/l, more preferably superior or equal to 11.0 g/l.

13. The method according to any of claim 8 to 12, wherein the one or more metal elements in the metal salt solution include:

- Ni in a content b, wherein b $\geq$ 30.0 mol%,
- Mn in a content c, wherein 0 $\leq$ c $\leq$ 70.0 mol%,
- Co in a content d, wherein 0 $\leq$ d $\leq$ 40.0 mol%,
- Al in a content q, wherein 0 $\leq$ e $\leq$ 10.0 mol%, and
- one or more additional elements in a content f, wherein the additional elements are elements from the list of B, Ba, Ca, Ce, Cr, Fe, La, Mg, Mo, Nb, Si, Sr, Ti, Y, V, W, Zn, and Zr, wherein 0 $\leq$ f $\leq$ 5.0 mol%, and

wherein b, c, d, e and f are contents expressed as mol% relative to M, and wherein b+c+d+e+f = 100 mol%.

**14.** A secondary particles-based powderous material compound obtained by the method according to any of claims 8 to 13, preferably the compound is the secondary particles-based powderous material compound according to any of claims 0 to 7.

**15.** A method of manufacturing a positive electrode active material, comprising the steps of:

- Mixing a powderous material comprising a secondary particles-based powderous material compound according to any of claim 0 to 7, a lithium source, and a optionally dopant source to obtain a mixture,
- Heating the mixture in oxidizing atmosphere at a temperature between 650°C to 1000°C to obtain the positive electrode active material, and optionally
- the method further comprising a heat treatment step before the mixing, wherein the powderous material is heated at a temperature of 105 °C to 750 °C.

**Fig. 1**

**Fig. 2**

**Fig. 3**

Europäisches
Patentamt

European
Patent Office

Office européen
des brevets

# EUROPEAN SEARCH REPORT

**Application Number**

EP 22 21 6691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 385 399 A (JINCHI ENERGY MAT CO LTD; HUNAN CHANGYUAN LICO NEW ENERGY CO LTD) 25 November 2022 (2022-11-25) * claims; examples * | 1-15 | INV. C01G53/00 C01G53/04 H01M4/525 |
| X | US 2017/338485 A1 (TOYA HIROYUKI [JP] ET AL) 23 November 2017 (2017-11-23) * examples; tables * | 1-4,6-15 | |
| X | JP 2015 164123 A (SUMITOMO METAL MINING CO) 10 September 2015 (2015-09-10) * claims; examples 3, 7; tables * | 1-4,7-15 | |
| X | CN 113 526 573 A (JINCHI ENERGY MAT CO LTD ET AL.) 22 October 2021 (2021-10-22) * claims; examples * | 1-15 | |
| A | US 11 345 609 B2 (BASF SHANSHAN BATTERY MAT CO LTD [CN]) 31 May 2022 (2022-05-31) * examples * | 1-15 | |

TECHNICAL FIELDS SEARCHED (IPC)

C01G
H01M

The present search report has been drawn up for all claims

| Place of search | Date of completion of the search | Examiner |
|---|---|---|
| Munich | 30 June 2023 | Marucci, Alessandra |

EPO FORM 1503 03.82 (P04C01)

## ANNEX TO THE EUROPEAN SEARCH REPORT
## ON EUROPEAN PATENT APPLICATION NO.

EP 22 21 6691

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| CN 115385399 | A | 25-11-2022 | NONE | | |
| US 2017338485 | A1 | 23-11-2017 | CN | 102725232 A | 10-10-2012 |
| | | | CN | 105948141 A | 21-09-2016 |
| | | | JP | 5638232 B2 | 10-12-2014 |
| | | | JP | 2011116580 A | 16-06-2011 |
| | | | KR | 20120099098 A | 06-09-2012 |
| | | | US | 2012270107 A1 | 25-10-2012 |
| | | | US | 2017338485 A1 | 23-11-2017 |
| | | | US | 2018205080 A1 | 19-07-2018 |
| | | | US | 2020044250 A1 | 06-02-2020 |
| | | | WO | 2011067935 A1 | 09-06-2011 |
| JP 2015164123 | A | 10-09-2015 | JP | 6358077 B2 | 18-07-2018 |
| | | | JP | 2015164123 A | 10-09-2015 |
| CN 113526573 | A | 22-10-2021 | NONE | | |
| US 11345609 | B2 | 31-05-2022 | CN | 107565125 A | 09-01-2018 |
| | | | EP | 3675253 A1 | 01-07-2020 |
| | | | JP | 7036924 B2 | 15-03-2022 |
| | | | JP | 2020532088 A | 05-11-2020 |
| | | | KR | 20200041978 A | 22-04-2020 |
| | | | US | 2021130189 A1 | 06-05-2021 |
| | | | WO | 2019037459 A1 | 28-02-2019 |

EPO FORM P0459

For more details about this annex : see Official Journal of the European Patent Office, No. 12/82